# EUROPEAN PATENT APPLICATION

(11) **EP 4 844 334 A1**
(43) Date of publication of application: **25.11.2026**
(21) Application number: 26746204.2
(22) Date of filing: 16.01.2026
(51) Int. Cl.: G01B 11/14, G01B 11/26, G01B 5/00, H01M 10/04, H01M 10/42

(54) **SECONDARY BATTERY STACK VISION IMAGING SYSTEM AND SECONDARY BATTERY STACK VISION INSPECTION METHOD THEREOF**

(30) Priority: 24.01.2025 KR 20250010820
(71) Applicant: LG Energy Solution, Ltd., Seoul 07335 (KR)
(72) Inventor: HONG, Sunggeun, Daejeon 34122 (KR); SO, Heeyoung, Daejeon 34122 (KR); KWON, Yongjun, Daejeon 34122 (KR); SIM, Jaeyeong, Daejeon 34122 (KR)
(74) Representative: Goddar, Heinz J.
(86) International application number: PCT/KR2026/000950
(87) International publication number: WO 2026/160770

(57) **Abstract**

A vision inspection method for a secondary battery stack according to the present disclosure includes: fixing a separator to a stack table in a folded state; fixing a first electrode and a second electrode to first and second pick-and-place units to combine the first and second electrodes with the separator; gripping a stack cell combined with the separator by a cell gripper made of a light guide plate material; and performing stack inspection through stack vision imaging by transporting the stack cell to the stack table. A secondary battery stack vision imaging system, comprising: a stack table; a cell gripper including a light guide plate; a vision camera; and a cell pressing jig.

## Description

### [Cross Reference to Related Applications]

This application is a national phase entry under 35 U.S.C. § 371 of International Application No. PCT/KR2026/000950, filed on January 16, 2026, which claims the benefit of priority based on Korean Patent Application No. 10-2025-0010820, filed on January 24, 2025, the entire contents of which are incorporated herein as part of this specification.

### [Technical Field]

The present disclosure relates to a secondary battery stack vision imaging system and a vision inspection method for a secondary battery stack.

### [Background]

With rising energy prices due to the depletion of fossil fuels and growing concerns about environmental pollution, the need for ecofriendly alternative energy sources is becoming important. Various power generation technologies, such as nuclear, solar, wind, and tidal power, are being studied, and energy storage devices for efficiently utilizing the generated energy are also attracting significant attention.

In particular, the need for batteries is rapidly increasing due to technological developments and increasing demand for various products, from portable electronic devices such as smartphones and laptops to electric vehicles, hybrid electric vehicles, drones, and energy storage systems (ESS). Research on batteries is actively underway to meet these diverse needs. In particular, lithium secondary batteries have attracted attention as a representative energy source due to advantages such as high energy density, high discharge voltage, and stable power output. Demand for lithium secondary batteries, such as lithium-ion batteries and lithium-ion polymer batteries, is particularly high.

A secondary battery includes an electrode assembly having a structure in which a positive electrode, a negative electrode, and a separator positioned between the positive electrode and the negative electrode are stacked. This electrode assembly may be categorized into several types depending on its structure. For example, there are a jelly-roll type electrode assembly formed by winding long sheettype positive and negative electrodes, which are separated by a separator, and a stack-type electrode assembly formed by sequentially stacking a plurality of positive and negative electrodes cut to a predetermined size, which are separated by a separator.

In addition, the secondary battery may be categorized into several types depending on their case shape. The secondary battery includes a cylindrical secondary battery in which the electrode assembly is housed in a cylindrical case, a prismatic secondary battery in which the electrode assembly is housed in a square case, and a pouch-type secondary battery in which the electrode assembly is housed in a pouch-type case made of a stacked sheet.

Meanwhile, reducing unit costs in the battery manufacturing process is a critical challenge for securing industrial competitiveness. To achieve this, improving production facility speed is essential. In particular, it is important to increase productivity in the stacking process that stacks the electrode and separator that constitute the battery cell.

In the commonly used zigzag stacking process, technology is being developed to simultaneously stack the negative electrode and positive electrode in a single pick-and-place process to improve production speed.

However, such a 2Cell (negative electrode/positive electrode) simultaneous pick-and-place method has limitations in real-time measurement of a gap between the negative electrode and the positive electrode and a gap between the negative electrode and the separator, which are critical-to-quality (CTQ) items for quality management in the stacking process. The CTQ items directly impact the final quality of the battery, including performance, stability, and lifespan. Failure to manage these items may lead to increased product defect rates or deteriorated electrochemical performance. Therefore, while the introduction of the 2Cell simultaneous pick-and-place technology offers the advantage of increasing productivity, the technical improvements are required to address the measurement and management issues of the CTQ items.

### SUMMARY[Technical Problem]

An aspect of the present disclosure provides a secondary battery stack vision imaging system which can effectively check a gap and alignment between electrodes during a stacking process by accurately inspecting, through a stacked separator, a position of a negative electrode positioned under the stacked separator in a simultaneous stacking method in which 2Cells (negative electrode/positive electrode) are picked and placed at one time, thereby improving process quality, and a vision inspection method for a secondary battery stack.

However, the technical problems to be achieved by the aspects of the present disclosure are not limited to the technical problems as described above, and other technical problems may exist.

### [Technical Solution]

As a technical means for achieving the above-described technical problem, according to a first aspect of the present disclosure, a vision inspection method for a secondary battery stack includes: fixing a separator to a stack table in a folded state; fixing a first electrode and a second electrode to first and second pick-and-place units to combine the first and second electrodes with the separator; gripping a stack cell combined with the separator by a cell gripper made of a light guide plate material; and transporting the stack cell to the stack table to perform stack inspection through stack vision imaging.

In some aspects of the present disclosure, in the fixing of the first electrode and the second electrode to the first and second pick-and-place units to combine the first and second electrodes with the separator, the first electrode may be a positive electrode, the second electrode may be a negative electrode, and the first electrode, the separator, and the second electrode may be sequentially combined with respect to an unfolded separator.

In some aspects of the present disclosure, the negative electrode may be configured to have a larger overall width and length than the positive electrode.

In some aspects of the present disclosure, the gripping of the stack cell combined with the separator by the cell gripper may include moving an upper cell gripper toward the upper portion of the stack cell, moving a lower cell gripper toward the lower portion of the stack cell, and gripping the stack cell by the upper cell gripper and the lower cell gripper.

According to some aspects of the present disclosure, the vision inspection method may further include the returning of the first and second pick-and-place units to their original positions by releasing the fixed state of the first and second pick-and-place units after the stack cell is gripped.

In some aspects of the present disclosure, the transporting of the stack cell to the stack table to perform the stack inspection through the stack vision imaging may include: moving backward and detaching the upper cell gripper that has moved the upper portion of the stack cell; fixing the stack cell by lowering a cell pressing jig to the upper portion of the stack cell; and emitting light from the light guide plate of the lower cell gripper.

In some aspects of the present disclosure, the lower cell gripper of the light guide plate material may be made of an acrylic material.

In some aspects of the present disclosure, the lower cell gripper of the light guide plate material may have an LED attached to its side surface to be used as a light-emitting member.

In the transporting of the stack cell to the stack table to perform the stack inspection through the stack vision imaging, a gap between a negative electrode-separator-positive electrode of the stack cell is measured to verify stack quality.

In addition, according to a second aspect of the present disclosure, a secondary battery stack vision imaging system includes: a stack table on which a stack cell combined with a separator is mounted; a cell gripper including a light guide plate for gripping the stack cell and transporting the stack cell to the stack table; a vision camera performing vision imaging for inspection of the stack cell; and a cell pressing jig fixing the stack cell by lowering the stack cell to the upper portion of the stack cell during the vision imaging.

In some aspects of the present disclosure, the cell gripper may include an upper cell gripper configured to move to the upper portion of the stack cell, and a lower cell gripper configured to move to a lower portion of the stack cell, and the light guide plate may be included in the lower cell gripper.

In some aspects of the present disclosure, the light guide plate included in the lower cell gripper may be made of an acrylic material.

In some aspects of the present disclosure, the lower cell gripper may include an LED attached to its side surface and operating as a light-emitting member that emits light from the lower portion of the stack cell.

According to some aspects of the present disclosure, the secondary battery stack vision imaging system may further include a front illumination positioned on an upper front surface of the stack cell for vision imaging by the vision camera to provide a predetermined amount of light and color temperature.

In some aspects of the present disclosure, the LED and the front illumination may each emit light having a color selected from among RGB colors.

In some aspects of the present disclosure, the LED and the front illumination may be selected to emit light in the same color.

In some embodiments of the present disclosure, the cell pressing jig may be lowered after the upper cell gripper, which has moved the upper portion of the stack cell, moves backward and is detached to fix the stack cell.

### [Advantageous Effects]

According to an aspect of the present disclosure described above, compared to the conventional methods, it is possible to achieve an approximately twofold improvement in stack speed, thereby significantly enhancing production efficiency. In particular, it is possible to precisely perform negative electrode stack quality inspection, thereby preventing, in advance, quality issues that may occur in existing processes and enabling reliable battery cell production.

In the conventional stacking methods, it is often difficult to accurately align the negative electrode and the positive electrode and to measure the gap between the electrodes, which may result in deficiencies in quality inspection. However, according to an aspect of the present disclosure, it is possible to perform a quality inspection of the negative electrode stack, thereby accurately measuring the gap between the negative electrode and the positive electrode and the separator, and promptly detecting the gap mismatches or defective electrodes. Accordingly, it is possible to improve the overall quality of the battery cell while reducing the defect rate that may occur in the production line.

The effects of the present disclosure are not limited to the above-described effects, and other effects that are not mentioned may be obviously understood by those skilled in the art from the following description.

### BRIEF DESCRIPTION OF THE DRAWINGS

FIG. 1 is a diagram for describing a secondary battery stack vision imaging system according to an aspect of the present disclosure.
FIG. 2 is a flowchart of a vision inspection method for a secondary battery stack according to an aspect of the present disclosure.
FIG. 3 is a diagram illustrating a separator preparation process step in an aspect of the present disclosure.
FIG. 4A is a front view illustrating the electrode combining process step in an aspect of the present disclosure.
FIG. 4B is a plan view illustrating the electrode combining process step in an aspect of the present disclosure.
FIG. 5A is a front view illustrating a stack cell grip process step in an aspect of the present disclosure.
FIG. 5B is a plan view illustrating the stack cell grip process step in an aspect of the present disclosure.
FIG. 6A is a front view illustrating a stack vision inspection process step in an aspect of the present disclosure.
FIG. 6B is a plan view illustrating the stack vision inspection process step in an aspect of the present disclosure.
FIG. 6C is a diagram for describing a lower cell gripper in an aspect of the present disclosure.
FIG. 7A and FIG. 7B are diagrams for describing the results of the stack vision inspection according to an aspect of the present disclosure.

DETAILED DESCRIPTION Advantages and features of the present disclosure and methods to achieve them will become apparent from the aspects described below in detail with reference to the accompanying drawings. However, the present disclosure is not limited to aspects to be disclosed below, but may be implemented in various different forms, these aspects will be provided only in order to make the disclosure of the present disclosure complete and allow those skilled in the art to completely recognize the scope of the present disclosure, and the present disclosure will only be defined by the scope of the claims.

The terms used in this specification are for describing aspects rather than limiting the present disclosure. In this specification, a singular form includes a plural form as well unless otherwise stated. The terms "comprise" and/or "comprising" used herein do not exclude the presence or addition of one or more other components other than the components mentioned. Like reference numerals refer to like components throughout the specification and "and/or" includes each of the components mentioned and all combinations thereof. Although "first," "second," and the like are used to describe various components, it goes without saying that these components are not limited by these terms. These terms are used only to distinguish one component from other components. Therefore, it goes without saying that the first component mentioned below may also be the second component within the technical spirit of the present disclosure.

Unless defined otherwise, all terms (including technical and scientific terms) used in this specification may be used as having the same meanings commonly understood by those skilled in the art to which the present disclosure pertains. In addition, the terms defined in commonly used dictionaries are not ideally or excessively interpreted unless explicitly and specifically defined otherwise.

In the description of the present disclosure, a "battery" or an "electrode assembly" may be a secondary battery. Furthermore, a pouch case housing the electrode assembly may be referred to as a battery cell. The secondary battery may refer to a battery made using a material capable of repeating an oxidation-reduction process between current and a material multiple times. For example, to produce the secondary battery, processes such as mixing, coating, roll pressing, slitting, notching and drying, lamination, folding and stacking, lamination and stacking, packaging, charging and discharging, degas, and characteristic inspection may be performed. In this case, separate production equipment (devices) may be used to perform each process. Here, each production equipment may operate according to adjustment parameters, setting values, etc., set or changed by an operator.

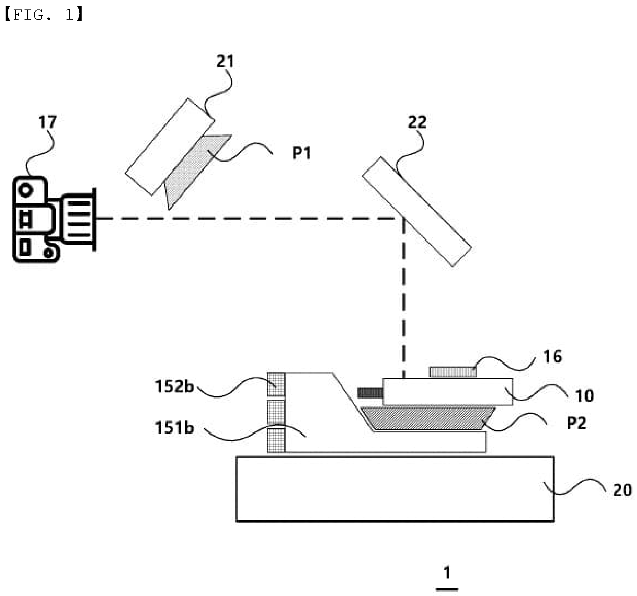

FIG. 1 is a diagram for describing a secondary battery stack vision imaging system 1 according to an aspect of the present disclosure.

A secondary battery stack vision imaging system 1 according to an aspect of the present disclosure includes a stack table 20, a cell gripper 15, a vision camera 17, and a cell pressing jig 16.

A stack cell 10 combined with a separator is mounted on the stack table 20. The stack table 20 ensures the stability of the stack cell 10, and allows the stack cell 10 to maintain its precise position without moving or twisting. In the preparation step, the separator is fixed to the stack table 20 in a folded state, and then an electrode is combined with the separator to form the stack cell 10.

The cell gripper 15 picks up the stack cell 10 combined with the separator and transports the stack cell 10 to the stack table 20. The cell gripper 15 includes an upper cell gripper 15a and a lower cell gripper 15b. After the upper cell gripper 15a moves the upper portion of the stack cell 10, and the lower cell gripper 15b moves a lower portion of the stack cell 20, the upper cell gripper 15a and the lower cell gripper 15b may simultaneously pick up the stack cell 10 and move the stack cell 10 to the stack table 20.

In this case, according to an aspect of the present disclosure, the lower cell gripper 15b includes a light guide plate 151b that may be made of acrylic material. The light guide plate provides an even light distribution, thereby optimizing the conditions required for vision imaging of the stack cell.

Furthermore, the lower cell gripper 15b includes an LED 152b attached to its side surface and operating as a light source that emits light from the lower portion of the stack cell 10. The LED 152b is used as one of light sources for vision imaging, and evenly emits light from the lower portion of the stack cell 10 to support accurately imaging the surface condition of the stack cell 10. The light source of the LED 152b may adjust the color temperature and brightness, thereby providing optimized illumination for various inspection environments.

In this case, an aspect of the present disclosure may further include a front illumination 21. The front illumination 21 provides a constant amount of light and color temperature toward an upper front surface of the stack cell 10 while the vision camera 17 is imaging an image. The front illumination 21 evenly illuminates the upper surface of the stack cell 10 to improve the imaging quality of the vision camera 17. The color of the front illumination 21 may be selected from RGB colors and optimized to suit the imaging conditions of the vision camera 17.

Meanwhile, the colors of the LED 152b and the front illumination 21 may be selected as one of the RGB colors to optimize the inspection environment, thereby improving the accuracy of the imaging. According to an aspect, the LED 152b and the front illumination 21 may be set to the same color to ensure a uniform color distribution across the surface of the stack cell 10, thereby providing consistency in vision imaging. The color of each light 21 and 152b may be adjusted in real time and set to optimize it to suit the condition of the stack cell 10.

For reference, in FIG. 1, P1 represents the color of the front illumination 21, and P2 represents the color projected onto the light guide plate 151b by the LED 152b. The colors of P1 and P2 may each be selected as one of the RGB colors, and if necessary, the same color may be set or different colors may be combined to provide the optimal illumination environment for inspection of the stack cell 10.

The vision camera 17 may perform the imaging for inspection of the stack cell 10, and image high-resolution images to accurately assess the condition of the stack cell 10. For example, the vision camera 17 may employ a near-infrared (NIR) camera or a high-resolution 25M mono camera. The vision camera 17 operates in conjunction with a cell pressing jig 16 that fixes the stack cell 10 during the vision imaging.

According to an aspect, a reflective mirror 22 may be provided to assist the imaging of the vision camera 17. The reflective mirror 22 may be positioned between the vision camera 17 and the stack cell 10 and adjust a light path so that the vision camera 17 may image images of the stack cell 10 from various angles. This allows the vision camera 17 to secure a field of view even in areas and angles that are difficult to image directly, thereby enabling effective vision inspection of the stack cell 10. The reflective mirror 22 is made of a highly reflective material to minimize light loss and may include a support structure that may be adjusted to a desired angle.

The cell pressing jig 16 fixes the stack cell 10 while the vision imaging is in progress. When the upper cell gripper 15a moves backward and is detached, the cell pressing jig 16 is lowered to press the stack cell 10 and fixes the stack cell 10 on the stack table 20. The cell pressing jig 16 minimizes the movement of the stack cell 10 and accurately supports imaging by the vision camera 17. Meanwhile, the cell pressing jig 16 evenly distributes pressure on the stack cell 10, thereby preventing the deformation or damage to the stack cell 10.

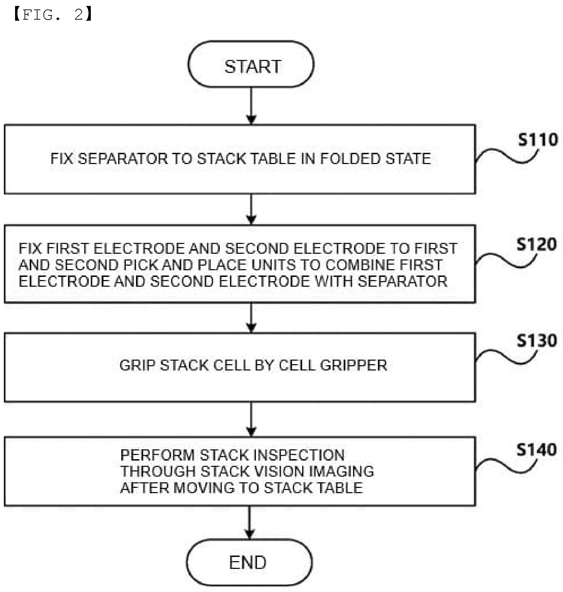

Hereinafter, a vision inspection method for a secondary battery stack performed by the secondary battery stack vision imaging system 1 according to an aspect of the present disclosure will be described in more detail with reference to FIG. 2, FIG. 3, FIG. 4A, FIG. 4B, FIG. 5A, FIG. 5B, FIG. 6A, FIG. 6B, and FIG. 6C.

FIG. 2 is a flowchart of a vision inspection method for a secondary battery stack according to an aspect of the present disclosure.

The vision inspection method for a secondary battery stack according to an aspect of the present disclosure includes a step (S110) of fixing the separator 11 to the stack table 20 in the folded state, a step (S120) of fixing the first electrode and the second electrode to first and second pick-and-place units 14a and 14b to combine the first and second electrodes with the separator 11, a step (S130) of gripping the stack cell 10 combined with the separator 11 by the cell gripper 15a and 15b made of light guide plate material, and a step (S140) of transporting the stack cell 10 to the stack table 20 to perform the stack inspection through the stack vision imaging.

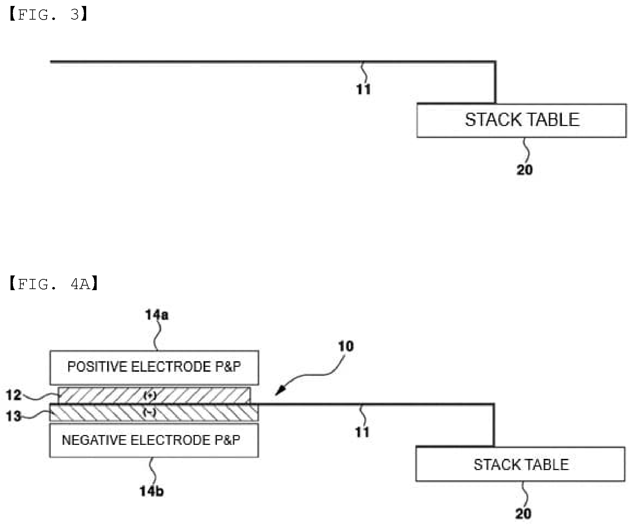

FIG. 3 is a diagram illustrating a separator 11 preparation process step in an aspect of the present disclosure.

The present disclosure first fixes the separator 11 to the stack table 20 in the folded state (S110). The separator 11 is transported to the designated position on the stacking table 20 for stacking, and the transported separator 11 may be fixed by a suction device positioned on the stack table 20.

In this case, the suction device operates using a vacuum suction method, and gently presses the separator 11 against the surface of the stacking table 20, thereby preventing the displacement or shaking during the process. While the separator 11 is being fixed by the suction, a portion of the separator 11 is maintained in the folded state. This is to secure a space for stacking the negative electrode 13 and the positive electrode 12 during the stacking process, and to proceed with the process without wrinkles or deformation of the separator 11.

Furthermore, before being fixed to the stacking table 20, the separator 11 is prepared in a rotated state to match the orientation and alignment required for stacking fixation. The rotating separator 11 is precisely adjusted to a specified angle and then disposed on the stack table 20. Once the suction fixation is completed, the electrode stacking, which is the next step, starts.

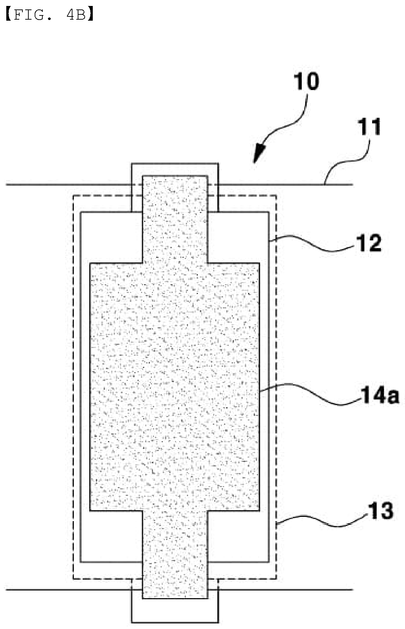

FIG. 4A is a front view illustrating the electrode combining process step in an aspect of the present disclosure. FIG. 4B is a plan view illustrating the electrode combining process step in an aspect of the present disclosure.

Next, the first and second electrodes are fixed to the first and second pick-and-place (P&P) units 14a and 14b and combined with the separator 11 (S120). In the electrode combining step, the positive electrode 12 and the negative electrode 13 are individually sucked and fixed by the first and second P&P units 14a and 14b, respectively, and then combined with the pre-prepared separator 11 to form a stack.

In this case, the first electrode is positioned as the positive electrode 12 on the upper portion of the separator 11 during the stacking process, and the second electrode is positioned as the negative electrode 13 on the lower portion of the separator 11. This stacking is performed in the order of "positive electrode 12 - separator 11 - negative electrode 13" based on the unfolded separator 11. During the stacking process, each electrode undergoes precise alignment correction to maintain its alignment with the separator 11. The alignment correction is a process to precisely align the position of each electrode with the separator 11 and other electrodes, thereby minimizing errors to maintain a constant gap between electrodes and ensuring the quality of the stacking process.

Thereafter, the corrected electrodes are sucked by the first and second P&P units 14a and 14b, respectively. First, the negative electrode 13, which is the second electrode, is sucked by the second P&P unit 14b and then stacked on the lower portion of the separator 11. Thereafter, the positive electrode 12, which is the first electrode, is stacked on the upper portion of the separator 11 by the first P&P unit 14a. Accordingly, the separator 11 is positioned between the positive electrode 12 and the negative electrode 13, thereby providing a structure that enables electrochemical reactions in the battery.

Meanwhile, the negative electrode 13 used in the above process may be designed to have a larger overall width and overall length than the positive electrode 12. This is to ensure a stable electrochemical reaction by allowing the negative electrode 13 to sufficiently cover the separator 11 and the positive electrode 12, and to reduce the possibility of a short circuit between the electrodes. In particular, the large overall width and overall length of the negative electrode 13 enlarge the contact surface with the separator 11 during the stacking process, thereby more facilitating electrode position alignment and preventing misalignment that may occur during the stacking process.

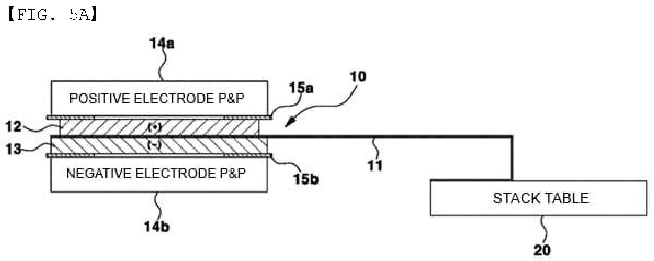

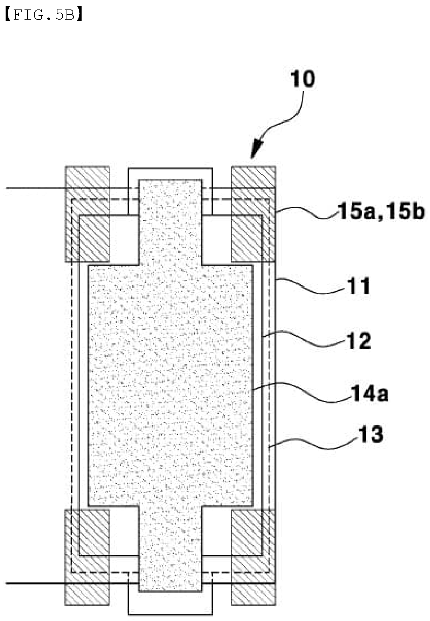

FIG. 5A is a front view illustrating a stack cell 10 grip process step in an aspect of the present disclosure. FIG. 5B is a plan view illustrating the stack cell 10 grip process step in an aspect of the present disclosure.

Next, the cell grippers 15a and 15b of the light guide plate material grip the stack cell 10 combined with the separator 11 (S130). The stack cell 10 grip process step is a preliminary step for accurately fixing the stack cell 10 and then moving the stack cell 10 to the stack table 20.

To this end, the upper cell gripper 15a moves the upper portion of the stack cell 10, and the lower cell gripper 15b moves the lower portion of the stack cell 10. Then, the lower cell gripper 15b operates together with the upper cell gripper 15a to simultaneously fix the stack cell 10 in the vertical direction. A pair of cell grippers 15a and 15b stably grip the stack cell 10, so that it may be mounted on the stack table 20 without shaking during the movement to the stack table 20.

Then, after the stack cell 10 is gripped, the first and second P&P units 14a and 14b release the fixed state and return to their original positions. In this process, the first and second P&P units 14a and 14b separate the electrodes that were previously fixed in the suction state and move back to their original positions to prepare for the next work. While the first and second P&P units 14a and 14b return to their original positions, the cell grippers 15a and 15b move the stack cell 10 to the stack table 20 in the fixed state.

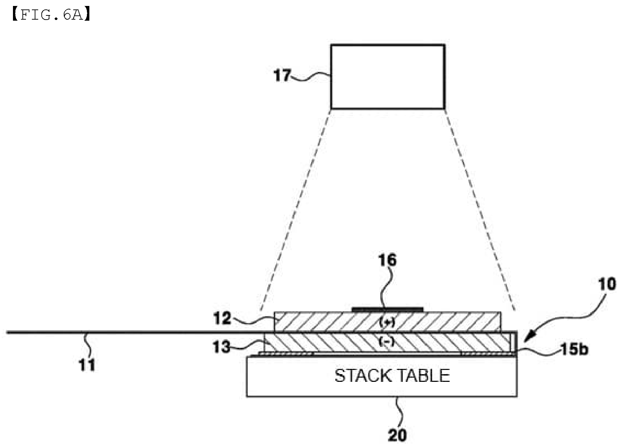

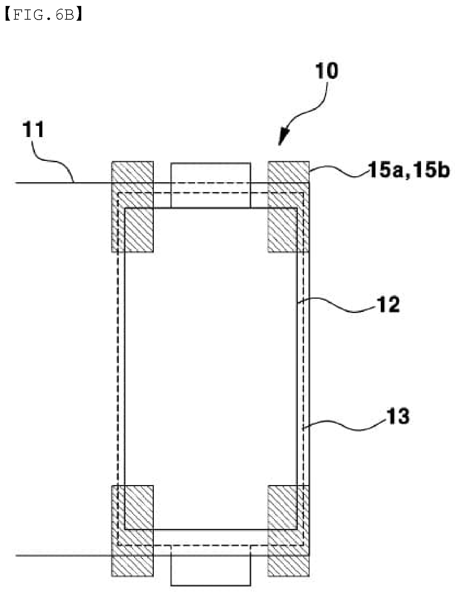

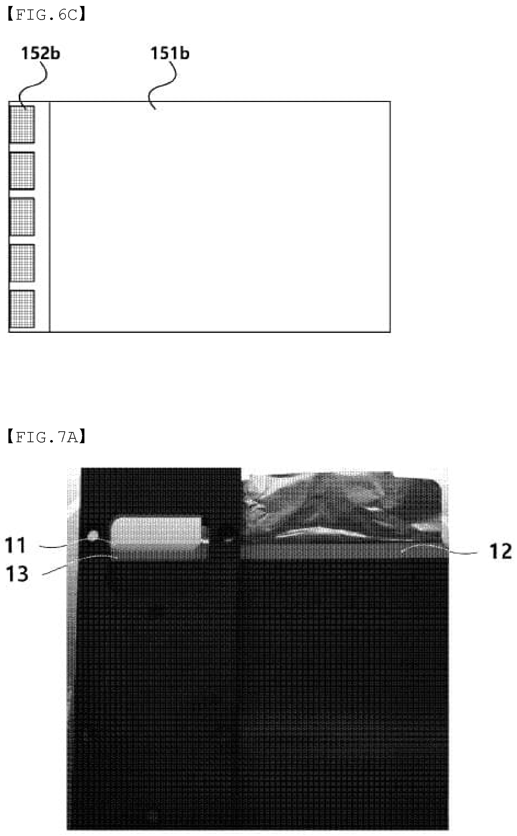

FIG. 6A is a front view illustrating a stack vision inspection process step in an aspect of the present disclosure. FIG. 6B is a plan view illustrating the stack vision inspection process step in an aspect of the present disclosure. FIG. 6C is a diagram for describing the lower cell gripper 15b in an aspect of the present disclosure.

Next, the stack cell 10 is transported to the stack table 20 to perform the stack inspection through the stack vision imaging (S140).

First, the upper cell gripper 15a, which moved the upper portion of the stack cell 10, moves backward and is detached from the stack cell 10. In this step, the upper cell gripper 15a returns to its original position, thereby allowing the stack vision inspection to be performed via the lower cell gripper 15b.

After the upper cell gripper 15a is detached, the cell pressing jig 16 is lowered to fix the stack cell 10. The cell pressing jig 16 serves to press the upper end of the stack cell 10 with a pressing force and fix the stack cell 10, thereby preventing the distortion of the stack cell 10 while the upper cell gripper 15a moves backward. When the cell pressing jig 16 is lowered to fix the stack cell 10, the stack cell 10 may be inspected using the stack vision imaging in a stable state.

Thereafter, the light guide plate 151b of the lower cell gripper 15b emits light. The lower cell gripper 15b is made of an acrylic material and has an LED 152b attached to its side surface to serve as a light-emitting member. The light guide plate 151b of the lower cell gripper 15b has a pattern formed on its lower portion to serve as the light-emitting member. This pattern controls the distribution of light and allows the position and status of the cell 10 to be confirmed. When the light guide plate 151b emits light through the LED 152b, the position of the stack cell 10 may be visually confirmed, and the precise position tracking of the stack cell 10 is possible during the inspection and monitoring process.

Next, the stack cell 10 is inspected using the stack vision imaging system 1. The stack vision imaging system 1 precisely measures the position and alignment of the stack cell 10, and the gap between each electrode, thereby confirming the stack quality. The stack vision imaging system 1 uses a fixed vision camera 17 and a sensor to inspect whether each component of the stack cell 10 is precisely aligned, whether the gap between the electrode and the separator 11 meets the specifications, etc. In particular, the gap between the negative electrode 13, the separator 11, and the positive electrode 12 is measured to confirm whether the quality of the stack cell 10 meets the standards.

Additionally, during the stack vision inspection step, a backlight effect is used while the lower cell gripper 15b of the light guide plate material is positioned. This backlight effect allows gap measurement by penetrating the separator 11. The backlight makes the components inside the stack cell 10 transparent, thereby accurately identifying the gap between the electrodes including the separator 11. This allows for more precise evaluation of the quality of the stack cell 10 and accurate detection of defective components.

Meanwhile, in the above description, steps S110 to S140 may be further divided into additional steps or combined into fewer steps according to an implementation example of the present disclosure. Also, some steps may be omitted if necessary, and an order between the steps may be changed. In addition, even if it is other omitted contents, the contents described in FIG. 1 and the contents described in FIG. 2, FIG. 3, FIG. 4A, FIG. 4B, FIG. 5A, FIG. 5B, FIG. 6A, FIG. 6B, and FIG. 6C are applied to each other.

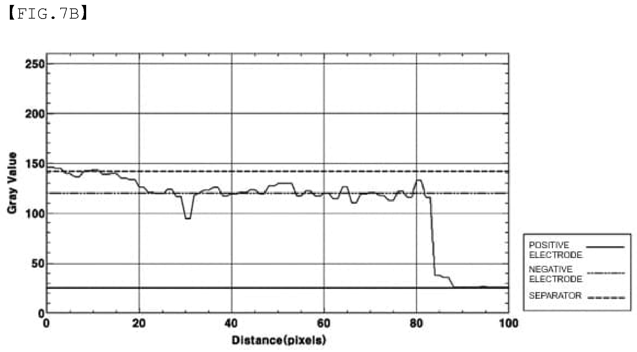

FIG. 7A and FIG. 7B are drawings for describing the results of the stack vision inspection according to one aspect of the present disclosure.

FIG. 7A is an image obtained from the stack vision inspection results, and is an image imaged through the color vision camera 17, the light guide plate LED illumination 152b (red), and the front illumination 21 (blue) used in the experiment. Here, a 25M color camera (resolution: 5120 x 5120, pixel size: 2.5 µm) was used as an experimental condition, and a CCTV 25 mm lens was applied. The resolution was set to 35 µm to enable the precise inspection of the stack cell 10. In the corresponding inspection result image, the separator 11, the negative electrode 13, and the positive electrode 12 constituting the stack cell 10 are clearly distinguished. In particular, the negative electrode 13 appears in a transparent state by passing through the separator 11, and through this, the position and state of the negative electrode 13 may be accurately confirmed.

FIG. 7B illustrates a gray value (GV) deviation between the separator 11 and the negative electrode 13, and between the negative electrode 13 and the positive electrode 12. In this case, the experimental results represent the results in a blue channel image among the RGB channels. According to the experimental results, the separator 11 - negative electrode 13 GV deviation was measured to be 20, which means a change in approximately 14.29%. In addition, the negative electrode 13 - positive electrode 12 GV deviation was measured to be 95, which showed a change in approximately 79.17%. Here, the GV deviation value is an indicator of the accuracy of the gap between the electrodes within the stack cell 10. In particular, the change in the gap between the separator 11 and the negative electrode 13 was a relatively small change of 14.29%, but the change in the gap between the negative electrode 13 and the positive electrode 12 showed a significantly large difference of 79.17%. This suggests that clear gap differences between the electrodes and with the separator 11 may be confirmed through the stack vision inspection method according to the present disclosure.

In this case, under the above experimental conditions, for the red channel, the separator 11-negative electrode 13 GV deviation was measured to be 65 (72.22% change), and the negative electrode 13-positive electrode 12 GV deviation was measured to be 15 (60.00% change). For the green channel, the separator 11-negative electrode 13 GV deviation was measured to be 20 (44.44% change), and the negative electrode 13-positive electrode 12 GV deviation was measured to be 20 (80.00% change).

The separator 11-negative electrode 13 GV deviation and the negative electrode 13-positive electrode 12 GV deviation according to the conditions of the LED illumination 152b and the front illumination 21 are shown in the table below. First, the results of comparing the NIR camera and the 25M mono camera are as shown in Table 1.

**[Table 1]**

| | Gray Value (GV) | Separator - Negative electrode GV deviation | Negative electrode - Positive electrode GV deviation |
|---|---|---|---|
| NIR Camera | Separator: about 205 Negative electrode: about 130 | - | - |
| | Positive electrode: about 20 | | |
| 25M | Separator: about 205 | - | - |
| Mono Camera | Negative electrode: about 130 | | |
| | Positive electrode: about 20 | | |

### <Comparison between NIR Camera and 25M Mono Camera (No LED illumination)>

According to Table 1, there was only a difference in the amount of light between the two cameras under the conditions where LED 152b illumination was not used, and there was no difference in the visibility of the negative electrode inside the cell. In addition, as a result of comparing the responsivity in the IR (850 nm) wavelength band, it was confirmed that the NIR camera showed higher responsivity than the 25M mono camera. Table 1 experimental results show how the characteristics of each camera affect the sensitivity and visibility in a specific wavelength band. Table 2 below shows the results by RGB channel when the LED 152b illumination and the front illumination 21 were applied respectively.

**[Table 2]**

| | Gray Value (GV) | Separator - Negative electrode GV deviation | Negative electrode - Positive electrode GV deviation |
|---|---|---|---|
| [Red channel] | Separator: about 190 | 90 (47.37% change) | 75 (75.00% change) |
| | Negative electrode: about 100 | | |
| | Positive electrode: about 25 | | |
| [Green channel] | Separator: about 40 | 20 (50.00% change) | 15 (75.00% change) |
| | Negative electrode: about 20 | | |
| | Positive electrode: about 5 | | |
| [Blue channel] | Separator: about 20 | 5 (25.00% change) | 0 (0.00% change) |
| | Negative electrode: about 15 | | |
| | Positive electrode: about 15 | | |

### <LED illumination (Red) / Front illumination (Red)>

**[Table 3]**

| | Gray Value (GV) | Separator - Negative electrode GV deviation | Negative electrode - Positive electrode GV deviation |
|---|---|---|---|
| [Red channel] | Separator: about 110 | 80 (72.73% change) | 15 (50.00% change) |
| | Negative electrode: about 30 | | |
| | Positive electrode: about 15 | | |
| [Green channel] | Separator: about 145 | 40 (27.59% change) | 85 (80.95% change) |
| | Negative electrode: about 105 | | |
| | Positive electrode: about 20 | | |
| [Blue channel] | Separator: about 70 | 20 (28.57% change) | 30 (60.00% change) |
| | Negative electrode: about 50 | | |
| | Positive electrode: about 20 | | |

### <LED illumination (Red) / Front illumination (Green)>

**[Table 4]**

| | Gray Value (GV) | Separator - Negative electrode GV deviation | Negative electrode - Positive electrode GV deviation |
|---|---|---|---|
| [Red channel] | Separator: about 90 | 65 (72.22% change) | 15 (60.00% change) |
| | Negative electrode: about 25 | | |
| | Positive electrode: about 10 | | |
| [Green channel] | Separator: about 45 | 20 (44.44% change) | 20 (80.00% change) |
| | Negative electrode: about 25 | | |
| | Positive electrode: about 5 | | |
| [Blue channel] | Separator: about 140 | 20 (14.29% change) | 95 (79.17% change) |
| | Negative electrode: about 120 | | |
| | Positive electrode: about 25 | | |

### <LED illumination (Red) / Front illumination (Blue)>

**[Table 5]**

| | Gray Value (GV) | Separator - Negative electrode GV deviation | Negative Electrode - Positive electrode GV deviation |
|---|---|---|---|
| [Red channel] | Separator: about 190 | 50 (26.32% change) | 115 (82.14% change) |
| | Negative electrode: about 140 | | |
| | Positive electrode: about 25 | | |
| [Green channel] | Separator: about 90 | 60 (66.67% change) | 20 (66.67% change) |
| | Negative electrode: about 30 | | |
| | Positive electrode: about 10 | | |
| [Blue channel] | Separator: about 50 | 25 (50.00% change) | 7 (28.00% change) |
| | Negative electrode: about 25 | | |
| | Positive electrode: about 18 | | |

### <LED illumination (Green) / Front illumination (Red)>

**[Table 6]**

| | Gray Value (GV) | Separator - Negative electrode GV deviation | Negative electrode - Positive electrode GV deviation |
|---|---|---|---|
| [Red channel] | Separator: about 55 | 35 (63.64% change) | 10 (50.00% change) |
| | Negative electrode: about 20 | | |
| | Positive electrode: about 10 | | |
| [Green channel] | separator: about 195 | 70 (35.90% change) | 105 (84.00% change) |
| | negative electrode: about 125 | | |
| | positive electrode: about 20 | | |
| [Blue channel] | separator: about 100 | 35 (35.00% change) | 45 (69.23% change) |
| | negative electrode: about 65 | | |
| | positive electrode: about 20 | | |

### <LED illumination (Green) / Front illumination (Green)>

**[Table 7]**

| | Gray Value (GV) | Separator - Negative electrode GV deviation | Negative electrode - Positive electrode GV deviation |
|---|---|---|---|
| [Red channel] | Separator: about 40 | 25 (62.50% change) | 5 (33.33% change) |
| | Negative electrode: about 15 | | |
| | Positive electrode: about 10 | | |
| [Green channel] | Separator: about 80 | 45 (56.25% change) | 25 (71.43% change) |
| | Negative electrode: about 35 | | |
| | Positive electrode: about 10 | | |
| [Blue channel] | Separator: about 200 | 40 (20.00% change) | 120 (75.00% change) |
| | Negative electrode: about 160 | | |
| | Positive electrode: about 40 | | |

### <LED illumination (Green) / Front illumination (Blue)>

**[Table 8]**

| | Gray Value (GV) | Separator - Negative electrode GV deviation | Negative electrode - Positive electrode GV deviation |
|---|---|---|---|
| [Red channel] | Separator: about 145 | 35 (24.14% change) | 90 (81.82% change) |
| | Negative electrode: about 110 | | |
| | Positive electrode: about 20 | | |
| [Green channel] | Separator: about 70 | 40 (57.14% change) | 20 (66.67% change) |
| | Negative electrode: about 30 | | |
| | Positive electrode: about 10 | | |
| [Blue channel] | Separator: about 70 | 45 (64.29% change) | 5 (20.00% change) |
| | Negative electrode: about 25 | | |
| | Positive electrode: about 20 | | |

### <LED illumination (Blue) / Front illumination (Red)>

**[Table 9]**

| | Gray Value (GV) | Separator - Negative electrode GV deviation | Negative electrode - Positive electrode GV deviation |
|---|---|---|---|
| [Red channel] | Separator: about 40 | 20 (50.00% change) | 10 (50.00% change) |
| | Negative electrode: about 20 | | |
| | Positive electrode: about 10 | | |
| [Green channel] | Separator: about 150 | 50 (33.33% change) | 80 (80.00% change) |
| | Negative electrode: about 100 | | |
| | Positive electrode: about 20 | | |
| | Separator: about 110 | | |
| [Blue channel] | Negative electrode: about 60 | 50 (45.45% change) | 40 (66.67% change) |
| | Positive electrode: about 20 | | |

### <LED illumination (Blue) / Front illumination (Green)>

**[Table 10]**

| | Gray Value (GV) | Separator - Negative electrode GV deviation | Negative electrode - Positive electrode GV deviation |
|---|---|---|---|
| [Red channel] | Separator: about 30 | 18 (60.00% change) | 4 (33.33% change) |
| | Negative electrode: about 12 | | |
| | Positive electrode: about 8 | | |
| [Green channel] | Separator: about 70 | 40 (57.14% change) | 20 (66.67% change) |
| | Negative electrode: about 30 | | |
| | Positive electrode: about 10 | | |
| [Blue channel] | Separator: about 185 | 55 (29.73% change) | 100 (76.92% change) |
| | Negative electrode: about 130 | | |
| | Positive electrode: about 30 | | |

### <LED illumination (Blue) / Front illumination (Blue)>

Through the above experiments, when the cell gripper 15b to which the light guide plate 151b according to an aspect of the present disclosure is applied, the gap between the separator 11 and the negative electrode 13, and the gap between the negative electrode 13 and the positive electrode 12 may be clearly and precisely confirmed. In particular, the cell gripper 15b based on the light guide plate 151b of the present disclosure exhibits excellent performance even in various illumination environments, and may improve image quality by optimizing the color combination of the LED 152b and the front illumination 21. In addition, the presence or absence of the gap may be inspected more clearly by selecting and analyzing a specific channel of the RGB image, thereby enabling more precise quality inspection of the stack structure. These results show that applying the cell gripper 15b based on the light guide plate 151b is essential in the gap confirmation process, and may flexibly respond to changing work environments through various color combinations.

Hereinabove, although the aspects of the present disclosure have been described with reference to the accompanying drawings, those skilled in the art to which the present disclosure pertains will be able to understand that these may be implemented in other specific forms without changing the technical spirit or essential features of the present disclosure. Therefore, it is to be understood that the aspects described above are illustrative rather than being restrictive in all aspects.

## Claims

1. A vision inspection method for a secondary battery stack, comprising:
fixing a separator to a stack table in a folded state;
fixing a first electrode and a second electrode to first and second pick-and-place units to combine the first and second electrodes with the separator;
gripping a stack cell combined with the separator by a cell gripper made of a light guide plate material; and
transporting the stack cell to the stack table to perform stack inspection through stack vision imaging.

2. The vision inspection method of claim 1, wherein, in the fixing of the first electrode and the second electrode to the first and second pick-and-place units to combine the first and second electrodes with the separator, the first electrode is a positive electrode, the second electrode is a negative electrode, and the first electrode, the separator, and the second electrode are sequentially aligned with respect to an unfolded separator.

3. The vision inspection method of claim 2, wherein the negative electrode has a larger overall width and length than the positive electrode.

4. The vision inspection method of claim 1, wherein the gripping of the stack cell combined with the separator by the cell gripper includes:
moving an upper cell gripper toward an upper portion of the stack cell;
moving a lower cell gripper toward a lower portion of the stack cell; and
gripping the stack cell by the upper cell gripper and the lower cell gripper.

5. The vision inspection method of claim 4, further comprising:
returning the first and second pick-and-place units to their original positions by releasing afixed state of the first and second pick-and-place units after the stack cell is gripped.

6. The vision inspection method of claim 4, wherein the transporting of the stack cell to the stack table to perform the stack inspection through the stack vision imaging includes:
moving backward and detaching the upper cell gripper that has moved the upper portion of the stack cell;
fixing the stack cell by lowering a cell pressing jig to the upper portion of the stack cell; and
emitting light from a light guide plate of the lower cell gripper.

7. The vision inspection method of claim 6, wherein the light guide plate of the lower cell gripper is made of an acrylic material.

8. The vision inspection method of claim 6, wherein the lower cell gripper has an LED attached to its side surface to be used as a light-emitting member.

9. The vision inspection method of claim 1, wherein, in the transporting of the stack cell to the stack table to perform the stack inspection through the stack vision imaging, a gap between a negative electrode-separator-positive electrode of the stack cell is measured to verify stack quality.

10. A secondary battery stack vision imaging system, comprising:
a stack table on which a stack cell combined with a separator is to be mounted;
a cell gripper including a light guide plate for gripping the stack cell and transporting the stack cell to the stack table;
a vision camera for performing vision imaging for inspection of the stack cell; and
a cell pressing jig for fixing the stack cell by lowering to an upper portion of the stack cell during the vision imaging.

11. The secondary battery stack vision imaging system of claim 10, wherein the cell gripper includes:
an upper cell gripper configured to move to the upper portion of the stack cell; and
a lower cell gripper configured to move to a lower portion of the stack cell, and
a light guide plate is included in the lower cell gripper.

12. The secondary battery stack vision imaging system of claim 11, wherein the light guide plate included in the lower cell gripper is made of an acrylic material.

13. The secondary battery stack vision imaging system of claim 11, wherein the lower cell gripper includes an LED attached to its side surface and operating as a light-emitting member that emits light from the lower portion of the stack cell.

14. The secondary battery stack vision imaging system of claim 13, further comprising:
a front illumination positioned on an upper front surface of the stack cell for vision imaging by the vision camera to provide a predetermined amount of light and color temperature.

15. The secondary battery stack vision imaging system of claim 14, wherein the LED and the front illumination each emit light having a color selected from among RGB colors.

16. The secondary battery stack vision imaging system of claim 14, wherein the LED and the front illumination are selected to emit light in the same color.

17. The secondary battery stack vision imaging system of claim 11, wherein the cell pressing jig is lowered to fix the stack cell after the upper cell gripper, which has moved the upper portion of the stack cell, moves backward and is detached.
